# EUROPÄISCHE PATENTSCHRIFT

(11) **EP 2 678 805 B1**
(45) Veröffentlichungstag und Bekanntmachung des Hinweises auf die Patenterteilung: **12.04.2017**
(21) Anmeldenummer: 12710170.7
(22) Anmeldetag: 23.02.2012
(51) Int. Cl.: B42D 25/00, B42D 25/29, G06K 9/00

(54) **IDENTIFIKATIONSVORRICHTUNG UND IDENTIFIKATIONSAUSWEIS**
IDENTIFICATION DEVICE AND IDENTIFICATION CARD
DISPOSITIF D'IDENTIFICATION ET CARTE D'IDENTIFICATION

(30) Priorität: 25.02.2011 DE 102011004787
(43) Veröffentlichungstag der Anmeldung: 01.01.2014
(60) Teilanmeldung: 13184991.1
(73) Patentinhaber: Bundesdruckerei GmbH, 10969 Berlin (DE)
(72) Erfinder: FRITZE, Frank, 12487 Berlin (DE); TIETKE, Markus, 12169 Berlin (DE); DONATH, Denis, 16348 Wandlitz (DE); PAESCHKE, Manfred, 16348 Wandlitz (DE)
(74) Vertreter: Patentship Patentanwaltsgesellschaft mbH
(86) Internationale Anmeldenummer: PCT/EP2012/053068
(87) Internationale Veröffentlichungsnummer: WO 2012/113864

(56) Entgegenhaltungen:
- DE-A1- 2 254 597
- DE-A1- 19 900 856
- US-A1- 2003 152 250

## Beschreibung

Die vorliegende Erfindung betrifft das Gebiet der Personenidentifikation.

Die Offenlegungsschrift US 2003/152250 A1 zeigt ein Identifikationsdokument umfassend ein Bild oder ein Foto einer Person.

Die Offenlegungsschrift DE 22 54 597 A1 zeigt ein Verfahren zum Identifizieren von Einzelpersonen unter Verwendung ausgewählter Körpermerkmale.

Die Offenlegungsschrift DE 19 900 856 A1 beschreibt, wie eine Unterschrift einer Person in einem Foto dieser Person versteckt werden kann.

Bekannte Identifikationsdokumente sind üblicherweise mit Passbildern von zu identifizierenden Personen versehen. Anhand eines visuellen Abgleichs eines Passbildes mit der äußeren Erscheinung eines Besitzers eines Identifikationsdokumentes können der Besitzer als die auf dem Passbild abgebildete Person bestätigt oder die Echtheit des Identifikationsdokumentes verifiziert werden.

Die üblicherweise verwendeten Passbilder zeigen jedoch nur eine einzige, beispielsweise frontale, Ansicht einer Person, was die visuelle Identifikation eines Besitzers eines Identifikationsdokumentes erschweren kann.

Es ist daher die Aufgabe der vorliegenden Erfindung, ein verbessertes Konzept zur Identifikation von Personen anhand von Identifikationsdokumenten zu schaffen. Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass ein verbessertes Konzept zur Identifikation von Personen durch die Bereitstellung einer anderen Ansicht der auf einem Passbild abgebildeten Person geschaffen werden kann. Die weitere Ansicht der Person kann beispielsweise anhand eines digitalen Kopfmodells, das eine Visualisierung der weiteren Ansicht ermöglicht, erfasst bzw. bereitgestellt werden. Ein derartiges digitales Kopfmodell ermöglicht insbesondere eine dreidimensionale Darstellung der Person, d.h. eine Darstellung von mehreren Ansichten der Person, wobei die Ansichten vorzugsweise nahezu fließend ineinander übergehen. Durch die weitere Ansicht kann sowohl der visuelle als auch der maschinell-biometrische Abgleich zwischen dem Besitzer des Identifikationsdokumentes und der auf dem Identifikationsdokument abgebildeten Person verbessert werden.

Das digitale Kopfmodell kann beispielsweise in der Gestalt von digitalen Daten vorliegen, welche in an sich bekannter Weise anhand von digitalisierten, insbesondere mehrdimensionalen, Aufnahmen einer Mehrzahl von Personen gewonnen werden können. Zur Gewinnung des digitalen Kopfmodells können auch mehrere Personen mehrdimensional aufgenommen werden, wobei ein Mittelwert über die digitalisierten Aufnahmen der mehreren Personen zur Erzeugung des digitalen Kopfmodels gebildet werden kann.

Gemäß einem Aspekt betrifft die Erfindung ein Identifikationsdokument zur Identifikation einer Person mit einer Abbildung einer ersten Ansicht der Person und einer Modellinformation, welche eine digitale Erfassung einer zweiten Ansicht der Person ermöglicht. Die Abbildung der ersten Ansicht der Person kann beispielsweise einen Abschnitt der Person darstellen, beispielsweise eine seitliche Kopfansicht oder eine frontale Kopfansicht. Die digitale Erfassung der zweiten Ansicht der Person anhand der Modellinformation kann beispielsweise eine Auswahl der zweiten Ansicht aus einer Mehrzahl von zweiten Ansichten oder eine Bestimmung der zweiten Ansicht oder eine lokale Modellierung der zweiten Ansicht umfassen. Die digitale Erfassung der zweiten Ansicht kann ferner die Zuordnung eines Kopfmodells zu der abgebildeten Person umfassen. Die Erfassung der zweiten Ansicht kann digital auf der Basis von digitalen Daten mittels eines Prozessors oder eines Computers erfolgen. Die digitalen Daten können beispielsweise eine oder mehrere Modellinformationen darstellen.

Gemäß einer Ausführungsform betrifft die Erfindung das Identifikationsdokument, bei dem die Abbildung die Modellinformation umfasst oder wobei die Modellinformation der Abbildung überlagert ist. Die Modellinformation kann beispielsweise eine Seiteninformation darstellen, welche im Bereich der Abbildung angeordnet ist. Dadurch wird in vorteilhafter Weise ermöglicht, die Seiteninformation bereits bei der optischen Erfassung der Abbildung zu erfassen. Eine nicht zur vorliegenden Erfindung gehörige Ausführungsform betrifft das Identifikationsdokument, bei dem die Modellinformation jedoch außerhalb des Abbildungsbereichs an einer beliebigen Stelle des Identifikationsdokumentes untergebracht sein kann. Handelt es sich bei dem Identifikationsdokument beispielsweise um ein elektronisches Identifikationsdokument, so kann die Modellinformation beispielsweise elektronisch herauslesbar sein.

Gemäß einer Ausführungsform betrifft die Erfindung das Identifikationsdokument, bei dem die Modellinformation beispielsweise durch ein digitales Wasserzeichen oder einen Barcode zur digitalen Erfassung der zweiten Ansicht der Person bereitstellbar oder bereitgestellt ist. Gemäß einer Ausführungsform betrifft die Erfindung das Identifikationsdokument, bei dem die Modellinformation beispielsweise durch eine vorbestimmte Anordnung von Punkten oder Polygonzügen oder Linien oder von einem Gitternetz bereitstellbar oder bereitgestellt ist. Gemäß einer Ausführungsform betrifft die Erfindung das Identifikationsdokument, bei dem die Modellinformation zumindest ein charakteristisches Merkmal der Person in der ersten Ansicht der Person umfasst. Die Modellinformation kann jedoch auch eine Mehrzahl von charakteristischen Merkmalen der Person in der ersten Ansicht umfassen.

Gemäß einer Ausführungsform betrifft die Erfindung das Identifikationsdokument, bei dem das charakteristische Merkmal oder das jeweilige charakteristische Merkmal eine Position der Augen der Person in der ersten Ansicht, eine Position des Kinns der Person in der ersten Ansicht, eine Position der Nase der Person in der ersten Ansicht, einen Augenabstand der Person in der ersten Ansicht, einen Augenbrauenabstand der Person in der ersten Ansicht, oder einen Augenwinkel der Person in der ersten Ansicht umfasst.

Gemäß einer Ausführungsform betrifft die Erfindung das Identifikationsdokument, bei dem die Modellinformation eine Auswahl eines digitalen Kopfmodells zur digitalen Erfassung der zweiten Ansicht ermöglicht. Das Kopfmodell kann beispielsweise in einer Identifikationsvorrichtung abgelegt sein, welche zur Identifizierung der Person anhand des Identifikationsdokumentes herangezogen wird. Gemäß einer Ausführungsform kann das Identifikationsdokument jedoch einen Speicherbereich umfassen, in welchem das digitale Kopfmodell, das der zu identifizierenden Person zugeordnet ist, in Form von digitalen Daten gespeichert sein kann. Gemäß einer Ausführungsform betrifft die Erfindung das Identifikationsdokument, bei dem die Modellinformation optisch oder magnetisch oder elektronisch oder mittels elektromagnetischer Wellen erfassbar ist. Die Modellinformation kann beispielsweise durch optische Merkmale bereitgestellt werden, beispielsweise mittels eines Fotoapparates oder einer Kamera oder eines Photodetektors oder einer sonstigen optischen Erfassungseinrichtung beispielsweise bei der optischen Erfassung der Abbildung der Person mit erfasst werden können. Zur Extraktion der optischen Modellinformation kann das optisch erfasste Bild beispielsweise gefiltert, insbesondere tiefpass- oder hochpassgefiltert werden, oder einem Mustererkennungsverfahren unterzogen werden, das die Erfassung der optischen Modellinformation ermöglicht. In einer nicht zur vorliegenden Erfindung gehörenden Ausführungsform kann die Modellinformation elektronisch auslesbar sein. Hierzu kann das Identifikationsdokument beispielsweise einen Speicher oder eine elektronische Schaltung aufweisen, welche bei einer externen Anregung die Modellinformation in elektronischer Form bereitstellt. Das Identifikationsdokument kann ferner einen Sender aufweisen, beispielsweise einen RFID-Sender (RFID: Radio Frequency Identification), welcher die Modellinformation mittels elektromagnetischer Wellen aussendet.

Gemäß einer Ausführungsform betrifft die Erfindung das Identifikationsdokument, bei dem die Abbildung ein Passbild, insbesondere ein biometrisches Passbild, der Person ist. Die Abbildung kann beispielsweise einen Kopfbereich, insbesondere das Gesicht der Person, darstellen. Gemäß einer Ausführungsform betrifft die Erfindung das Identifikationsdokument, bei dem das Identifikationsdokument ein Ausweisdokument, ein Reisepass, ein Zahlungsmittel, beispielsweise eine Bankkarte oder eine Kreditkarte, ein Führerschein, ein Unternehmensausweis, ein Frachtbrief oder ein Berechtigungsausweis sein kann.

Gemäß einer Ausführungsform betrifft die Erfindung das Identifikationsdokument, das ein- oder mehrlagig papier- und/oder kunststoffbasiert sein kann. Vorzugsweise ist das Dokument aus kunststoffbasierten Folien aufgebaut, welche zu einem Kartenkörper mittels Verkleben und/oder Laminieren zusammengefügt werden, wobei die Folien bevorzugt ähnliche stoffliche Eigenschaften aufweisen. Dadurch wird ein späteres Auftrennen des Kartenkörpers zu Manipulationszwecken erschwert.

Gemäß einer Ausführungsform betrifft die Erfindung das Identifikationsdokument, das ein elektronisches Identifikationsdokument, beispielsweise eine Chipkarte oder eine Smartcard, sein kann.

Gemäß einem Aspekt betrifft die Erfindung eine Identifikationsvorrichtung zur Identifikation einer Person anhand eines Identifikationsdokumentes, das eine Abbildung einer ersten Ansicht der Person aufweist und angepasst ist, eine Modellinformation bereitzustellen, welche eine digitale Erfassung einer zweiten Ansicht der Person ermöglicht, wobei die Identifikationsvorrichtung eine Erfassungseinrichtung zur Erfassung der Modellinformation und einen Prozessor, welcher ausgebildet ist, anhand der Modellinformation eine zweite Ansicht der Person zu erfassen, umfasst.

Gemäß einem Aspekt betrifft die Erfindung die Identifikationsvorrichtung, bei der die Erfassungseinrichtung ausgebildet ist, die Modellinformation optisch oder magnetisch oder elektronisch oder mittels elektromagnetischer Wellen zu erfassen, insbesondere auszulesen. Die Erfassungseinrichtung kann beispielsweise einen Fotoapparat oder eine Kamera zur optischen Erfassung der Modellinformation oder einen Magnetfelddetektor zur magnetischen Erfassung der Modellinformation oder eine elektronische Schaltung zur elektronischen Erfassung der Modellinformation oder einen Empfänger zum Empfang von elektromagnetischen Wellen mit der Modellinformation aufweisen. Bei der optischen Erfassung kann die Erfassungseinrichtung oder der Prozessor ferner ausgebildet sein, die Modellinformation aus der optisch erfassten Abbildung wie vorstehend erwähnt zu extrahieren. Ein nicht zur vorliegenden Erfindung gehörender Aspekt betrifft eine Identifikationsvorrichtung zur Identifikation einer Person anhand eines Identifikationsdokuments, das eine Abbildung einer ersten Ansicht der Person umfasst, mit einer Erfassungseinrichtung zur Erfassung der Abbildung und einem Prozessor, der ausgebildet ist, anhand der erfassten Abbildung eine Modellinformation zu erzeugen, welche eine digitale Erfassung einer zweiten Ansicht der Person ermöglicht. Die Erfassungseinrichtung kann beispielsweise eine optische Erfassungseinrichtung sein.

Gemäß einer Ausführungsform betrifft die Erfindung die Identifikationsvorrichtung, wobei der Prozessor ausgebildet ist, die Modellinformation mit einer Mehrzahl von vorgespeicherten Modellinformationen zu vergleichen, insbesondere zu korrelieren, und der Modellinformation diejenige vorgespeicherte Modellinformation zuzuordnen, welche der Modellinformation entspricht.

Bei einem Vergleich der Modellinformation mit der Mehrzahl von vorgespeicherten Modellinformationen kann der Prozessor beispielsweise charakteristische Merkmale wie einen Augenabstand, eine Position des Kinns, eine Position der Nase, einen Augenabstand, einen Augenbrauenabstand oder einen Augenwinkel der Person, mit vorgespeicherten charakteristischen Merkmalen vergleichen, wobei die charakteristischen Merkmale die jeweilige vorgespeicherte Modellinformation bilden könne. Ferner kann beispielsweise ein Gitternetz oder ein Koordinatensystem verwendet werden, um beispielsweise Abstandsunterschiede zwischen den jeweiligen charakteristischen Merkmalen, beispielsweise zwischen charakteristischen Merkmalen, welche die Modellinformation bilden, und den vorgespeicherten charakteristischen Merkmalen, welche jeweils eine vorgespeicherte Modellinformation bilden, zu erfassen. Auf der Basis des Vergleichs kann beispielsweise diejenige vorgespeicherte Modellinformation mit dem geringsten Abstand oder mit den geringsten Abständen ausgewählt werden. Ist eine eindeutige Entscheidung zwischen zwei vorgespeicherten Modellinformationen nicht eindeutig, so können beispielsweise Abstandszwischenwerte erzeugt und zum Zwecke weiterer Vergleiche verwendet werden. Bei der Erfassung der Abstände zwischen mehreren charakteristischen Merkmalen können die Abstände ferner gewichtet oder ungewichtet überlagert werden, um eine Metrik zu erhalten. Werden die Abstände gewichtet, so kann das jeweilige charakteristische Merkmal, wie etwa die Position der Augen oder der Wangenknochen, mit einem Gewichtungsfaktor gewichtet werden, welcher beispielsweise zwischen 0 und 1 liegen kann. Die erfassten Abstände zwischen den charakteristischen Merkmalen können ferner normiert werden, wobei zur Normierung beispielsweise ein Augenabstand oder ein sonstiger Abstand verwendet werden kann.

Gemäß einer Ausführungsform betrifft die Erfindung beide Identifikationsvorrichtungen, wobei der Prozessor ausgebildet ist, der Modellinformation ein digitales Kopfmodell zuzuordnen, das derjenigen vorgespeicherten Modellinformation zugeordnet ist, welche der Modellinformation entspricht, wobei das digitale Kopfmodell die zweite Ansicht der Person umfasst. Das digitale Kopfmodell kann beispielsweise der mittels der vorstehend genannten Erfassungseinrichtung erfassten Modellinformation zugeordnet werden.

Die jeweilige Identifikationsvorrichtung kann ferner einen Speicher aufweisen, in welchem eine Mehrzahl von digitalen Kopfmodellen in Form von digitalen Daten, insbesondere binären Daten, abgelegt ist. Der Prozessor kann zur Erfassung der zweiten Ansicht beispielsweise dasjenige Kopfmodell auswählen, dessen charakteristische Merkmale am ehesten den charakteristischen Merkmalen entsprechen, welche die Modellinformation bilden, wie etwa Augenabstand. Diese Auswahl kann, wie vorstehend ausgeführt, auf der Basis der vorgespeicherten Modellinformationen durchgeführt werden. Das digitale Kopfmodell kann beispielsweise nur die zweite Ansicht der Person umfassen oder darstellen. Das digitale Kopfmodell kann jedoch auch eine Darstellung von mehreren Ansichten der Person bereitstellen, um beispielsweise eine dreidimensionale Ansicht der Person zu ermöglichen. Das digitale Kopfmodell kann sich von der exakten Kopfform der zu identifizierenden Person unterscheiden und lediglich ein für die Person repräsentatives Kopfmodell bilden.

Gemäß einer Ausführungsform betrifft die Erfindung beide Identifikationsvorrichtungen, wobei der Prozessor ausgebildet ist, der Modellinformation ein digitales Kopfmodell, das die zweite Ansicht der Person umfasst, zuzuordnen. Diese Zuordnung kann wie vorstehend beschrieben unter Verwendung von vorgespeicherten Modellinformationen erfolgen. Gemäß einer Ausführungsform kann das digitale Kopfmodell jedoch unmittelbar der Modellinformation zugeordnet werden.

Gemäß einer Ausführungsform umfasst jede Identifikationsvorrichtung einen Speicher zur Speicherung des digitalen Kopfmodells oder zur Speicherung einer Mehrzahl von digitalen Kopfmodellen in der Gestalt von digitalen Daten.

Gemäß einer Ausführungsform betrifft die Erfindung beide Identifikationsvorrichtungen, wobei die Modellinformation ein charakteristisches Merkmal der ersten Ansicht, insbesondere einer Position der Augen der Person in der ersten Ansicht, eine Position des Kinns der Person in der ersten Ansicht, eine Position der Nase der Person in der ersten Ansicht, einen Augenabstand der Person in der ersten Ansicht, einen Augenbrauenabstand der Person in der ersten Ansicht, einen Abstand von Wangenknochen der Person in der ersten Ansicht oder einen Augenwinkel der Person in der ersten Ansicht, umfasst.

Gemäß einer Ausführungsform betrifft die Erfindung beide Identifikationsvorrichtungen, wobei ein Sender zum Aussenden einer Information über die zweite Ansicht der Person über ein Kommunikationsnetzwerk vorgesehen ist. Die Information über die zweite Ansicht der Person kann beispielsweise das der Person zugeordnete digitale Kopfmodell sein. Das digitale Kopfmodell kann beispielsweise an einen entfernten Verifizierungsserver zwecks biometrischen Abgleichs übermittelt werden, um die Person noch sicherer zu identifizieren. Dazu kann die Identifikationsvorrichtung so ausgebildet sein, dass das Ergebnis der Verifikation optisch und/oder akustisch ausgegeben wird.

Gemäß einer Ausführungsform betrifft die Erfindung beide Identifikationsvorrichtungen, welche ausgebildet sein können, die zweite Ansicht anzuzeigen. Hierzu kann die jeweilige Identifikationsvorrichtung eine Anzeigeeinrichtung, beispielsweise eine LCD-Anzeige oder eine OLED-Anzeige, umfassen, um die zweite Ansicht oder um ein Kopfmodell anzuzeigen. Die Anzeigeeinrichtung kann beispielsweise durch den vorstehend genannten Prozessor gesteuert werden.

Gemäß einem Aspekt betrifft die Erfindung ein Identifikationsverfahren zur Identifikation einer Person anhand des Identifikationsdokumentes, das eine Abbildung einer ersten Ansicht einer Person aufweist und angepasst ist, eine Modellinformation bereitzustellen, welche eine digitale Erfassung einer zweiten Ansicht der Person ermöglicht, wobei das Identifikationsverfahren die folgenden Schritte umfasst: Erfassen der Modellinformation und Erfassen einer zweiten Ansicht der Person anhand der Modellinformation.

Weitere Merkmale des Identifikationsverfahrens ergeben sich unmittelbar aus der Funktionalität der Identifikationsvorrichtung zur Identifikation einer Person anhand eines Identifikationsdokumentes, das eine Abbildung einer ersten Ansicht der Person aufweist und angepasst ist, eine Modellinformation bereitzustellen, welche eine digitale Erfassung einer zweiten Ansicht der Person ermöglicht. Ein nicht zur vorliegenden Erfindung gehörender Aspekt betrifft ein Identifikationsverfahren zur Identifikation einer Person anhand eines Identifikationsdokuments, das eine Abbildung einer ersten Ansicht der Person umfasst, mit: Erfassen der Abbildung und Erzeugen einer Modellinformation, welche eine digitale Erfassung einer zweiten Ansicht der Person ermöglicht, anhand der erfassten Abbildung.

Weitere Merkmale des Identifikationsverfahrens ergeben sich unmittelbar aus der Funktionalität der Identifikationsvorrichtung zur Identifikation einer Person anhand eines Identifikationsdokumentes, das eine Abbildung einer ersten Ansicht der Person umfasst, bei dem die Abbildung erfasst wird.

Gemäß einer Ausführungsform betrifft die Erfindung ein Identifikationsverfahren, bei dem die zweite Ansicht angezeigt wird. Die zweite Ansicht kann beispielsweise mittels einer Anzeigeeinrichtung angezeigt werden.

Gemäß einem weiteren Aspekt betrifft die Erfindung ein Computerprogramm mit einem Programmcode zur Ausführung eines der Identifikationsverfahren auf einem digitalen Computer. Gemäß einem weiteren Aspekt betrifft die Erfindung eine programmtechnisch eingerichtete Vorrichtung, welche ausgebildet ist, das vorstehend genannte Computerprogramm zur Ausführung eines der Identifikationsverfahren auszuführen.

Weitere Ausführungbeispiele werden Bezug nehmend auf die beiliegenden Zeichnungen erläutert, wobei die Ausführungbeispiele der Figuren 3, 4, 7 und 8 nicht Teil der vorliegenden Erfindung sind und nur des Anschauung dienen.

Es zeigen:
- Fig. 1a: ein Identifikationsdokument;
- Fig. 1b: eine Abbildung mit einer Modellinformation;
- Fig. 1c: eine zweite Ansicht einer Person;
- Fig. 1d, 1e: unterschiedliche Ansichten der Person anhand eines digitalen Kopfmodells;
- Fig. 2: einen Ablauf eines Identifikationsverfahrens;
- Fig. 3: ein Identifikationsdokument;
- Fig. 4: einen Ablauf eines Identifikationsverfahrens;
- Fig. 5: ein Blockdiagramm einer Identifikationsvorrichtung;
- Fig. 6: ein Diagramm eines Identifikationsverfahrens;
- Fig. 7: ein Blockdiagramm einer Identifikationsvorrichtung; und
- Fig. 8: ein Diagramm eines Identifikationsverfahrens.

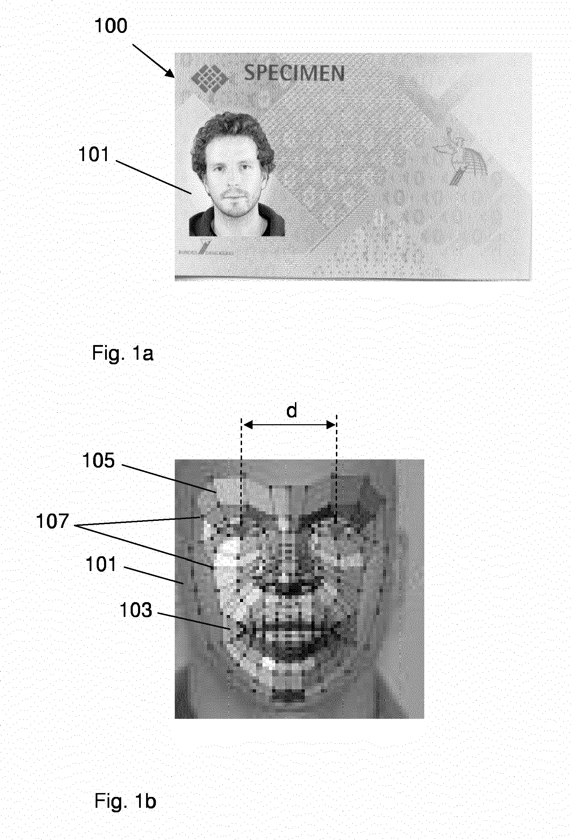

Fig. 1a zeigt ein Identifikationsdokument 100 mit einer Abbildung 101 einer ersten Ansicht einer Person. Die Abbildung 101 kann beispielsweise eine Frontansicht der Person darstellen. Das Identifikationsdokument 100 umfasst eine Modellinformation, welche eine digitale Erfassung einer zweiten Ansicht der Person, beispielsweise einer Seitenansicht der Person, ermöglicht. Die Modellinformation kann beispielsweise der Abbildung 101 überlagert sein, wie es beispielsweise in Fig. 1b dargestellt ist.

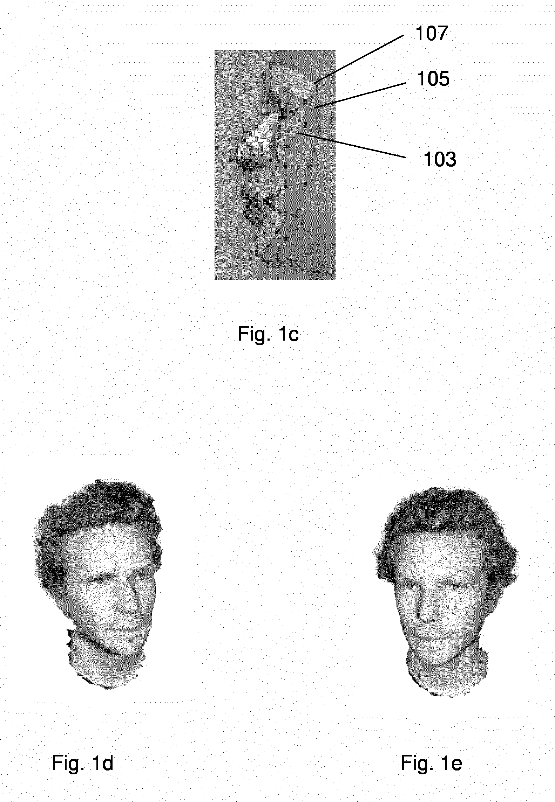

Fig. 1b zeigt eine beispielhafte Modellinformation 103 in der Gestalt von beispielsweise Polygonzügen 105, welche der Abbildung 101 überlagert sein können, und/oder Vereinigungspunkten 107, an denen Sich die Polygonzüge 105 vereinigen können. Dadurch entsteht eine Struktur, welche eine Bestimmung einer zweiten Ansicht der Person ermöglicht. Hierzu können beispielsweise charakteristische Merkmale, wie etwa ein Augenabstand d oder eine Position der Nase oder der Wangenknochen, verwendet werden. Die auf der Basis der Modellinformation 103 erfasste oder bestimmte zweite Ansicht ist als Profilansicht beispielhaft in Fig. 1c dargestellt.

Die zweite Ansicht kann beispielsweise durch ein digitales Kopfmodell bestimmt werden, das auf der Basis der Modellinformation 103 aus einer Mehrzahl von digitalen Kopfmodellen ausgewählt werden kann. In den Fig. 1d und 1e sind unterschiedliche Ansichten der Person unter Verwendung desselben digitalen Kopfmodells dargestellt.

Die Modellinformation 103 kann beispielsweise der Abbildung 101, wie es in Fig. 1b dargestellt ist, überlagert sein. Gemäß einer Ausführungsform kann die Modellinformation in der Abbildung 101 oder an einer anderen Stelle des in Fig. 1a dargestellten Identifikationsausweises untergebracht, beispielsweise versteckt sein. Die Modellinformation kann beispielsweise in der Gestalt der in Fig. 1b bereits dargestellten Polygonzüge 105 und/oder der Vereinigungspunkte 107 vorliegen. Die Modellinformation kann jedoch auch in der Gestalt eines digitalen Wasserzeichens eines Barcodes oder dergleichen vorliegen. Die Modellinformation kann ferner derart feine Strukturen aufweisen, dass sie durch ein menschliches Auge kaum oder nicht erfaßbar oder auflösbar ist. Zur Erfassung einer derartigen, optischen Modellinformation können beispielsweise optische Detektoren oder Sensoren oder Fotoapparate oder sonstige Bildaufnahmevorrichtungen herangezogen werden, welche eine optische Erfassung der Modellinformation 103 oder der Abbildung 101 mit der Modellinformation 103 ermöglichen.

Die Verarbeitung der Modellinformation 103 kann auf einer Identifikationsvorrichtung mittels Software, insbesondere mittels einer Erkennungssoftware, erfolgen. Dabei wird beispielsweise eine Mustererkennung durchführt, um die Modellinformation 103, beispielsweise in der Form von charakteristischen Merkmalen, wie dem Augenabstand d oder dergleichen, zu erkennen und zu verarbeiten. Durch den Einsatz einer derartigen Software können daher auch Smartphones oder mobile Computer als Identifikationsvorrichtungen eingesetzt werden. Ein Smartphone kann beispielsweise eine Mehrzahl von digitalen Kopfmodellen bereitstellen, so dass dasjenige digitale Kopfmodell, das anhand der erfassten Modellinformation der in der Abbildung 101 abgebildeten Person lokal zugeordnet wurde, auch lokal auf einer Anzeigeeinrichtung des Smartphones dargestellt werden kann, um beispielsweise die zweite Ansicht der Person anzuzeigen. Das Smartphone kann ferner ausgebildet sein, eine Kommunikationsverbindung zu einem externen Server aufzubauen, um an diesen Server das ausgewählte Kopfmodell zwecks biometrischen Abgleichs zu übermitteln.

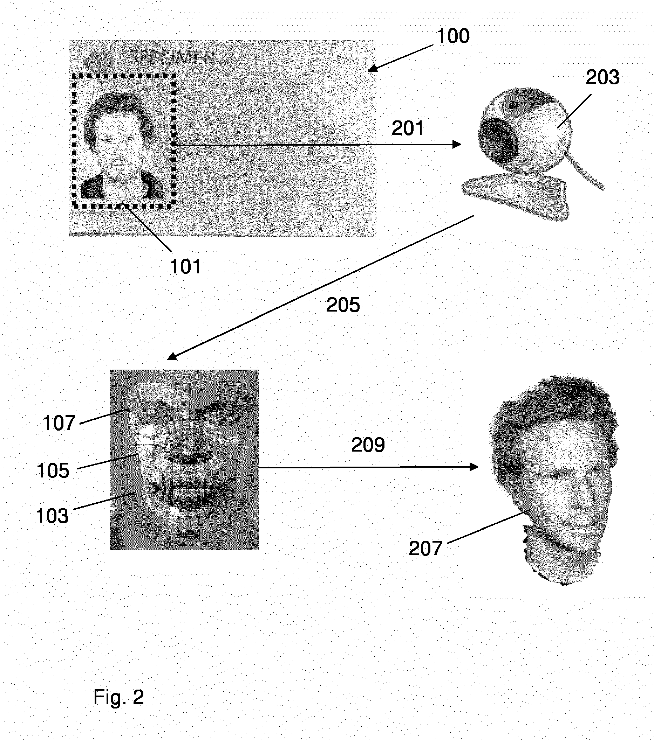

Fig. 2 zeigt einen Ablauf eines Identifikationsverfahrens zur Identifikation der in Fig. 1 dargestellten Person anhand der Modellinformation 103. Im Verfahrensschritt 201 wird die Modellinformation 103 beispielsweise optisch mittels einer Kamera 203 erfasst. Hierbei wird gleichzeitig die Modellinformation 103, welche beispielsweise der Abbildung 101 überlagert ist, mit erfasst. Die Extraktion der Modellinformation 103 aus dem mittels der Kamera 203 erfassten Bild kann mittels eines digitalen Prozessors unter Verwendung einer Erkennungssoftware durchgeführt werden. Hierbei kann die Erkennungssoftware beispielsweise eine digitale Bildfilterung und/oder Bildverarbeitung durchführen. Die Bildverarbeitung kann beispielsweise eine Mustererkennung aufweisen, welche die Detektion der beispielhaften optischen Modellinformation 103 ermöglicht.

Im Verfahrensschritt 205 wird die detektierte Modellinformation 103 bereitgestellt und kann anschließend zur Bestimmung eines digitalen Kopfmodells 207 herangezogen werden. Hierbei wird in einem in Fig. 2 nicht dargestellten Verfahrensschritt die Modellinformation beispielsweise mit einer Mehrzahl von Modellinformationen verglichen, und es wird dasjenige digitale Kopfmodell, beispielsweise das digitale Kopfmodell 207, ausgewählt, das derjenigen vorgespeicherten Modellinformation zugeordnet ist, welche der Modellinformation 103 am ehesten entspricht. Hierzu können beispielsweise Abstände zwischen charakteristischen Merkmalen, wie beispielsweise Augenabstände d, oder auch Abstände zwischen den Polygonzügen 105 oder Abstände zwischen den Vereinigungspunkten 107 miteinander verglichen werden. Anhand eines derartigen Vergleichs kann diejenige vorgespeicherte Modellinformation ermittelt werden, welche insgesamt die geringsten Abstände aufweist. Im Verfahrensschritt 209 wird die zweite Ansicht der Person anhand des Kopfmodells 207 erfasst und/oder angezeigt.

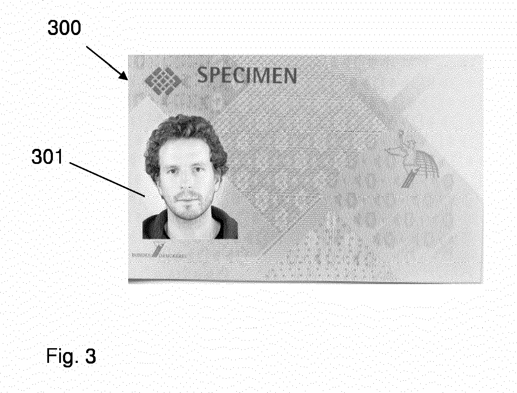

Fig. 3 zeigt ein Identifikationsdokument 300 mit einer Abbildung 301, wobei keinerlei Modellinformation vorgesehen ist. Bei dem in Fig. 3 dargestellten Identifikationsdokument 300 kann es sich beispielsweise um ein gewöhnliches Identifikationsdokument mit einer gewöhnlichen Abbildung 301, insbesondere Passbild, der Person handeln. Zur Erfassung einer zweiten Ansicht der in der Abbildung 301 dargestellten Person kann die Modellinformation direkt anhand der Abbildung 301 gewonnen werden. Hierzu kann die Abbildung 301 beispielsweise optisch aufgenommen und digital verarbeitet werden, um beispielsweise charakteristische Merkmale der Person, wie etwa einen Augenabstand oder eine Position der Nase, zu erfassen. Derartige charakteristische Merkmale bilden gemäß einer Ausführungsform diejenige Modellinformation, welche zur Erfassung der zweiten Ansicht der in der Abbildung 301 dargestellten Person verwendet werden kann.

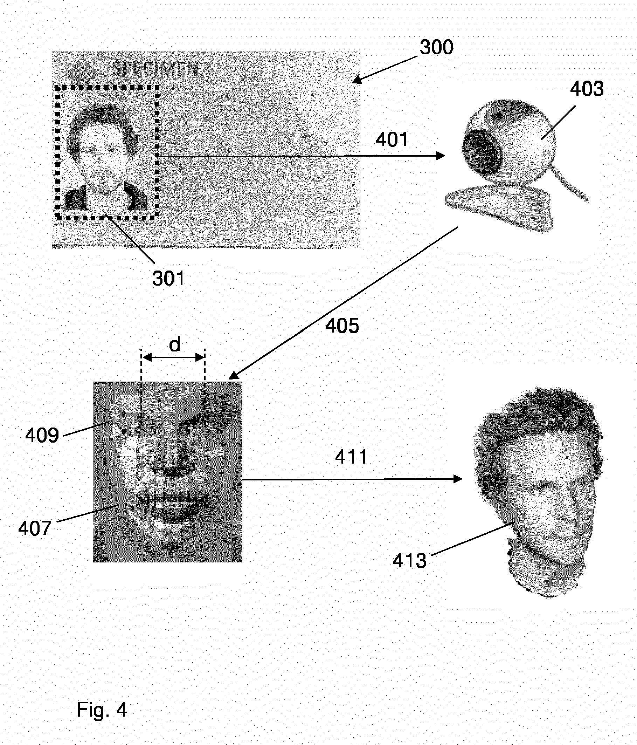

Fig. 4 zeigt einen Ablauf eines Identifikationsverfahrens zur Identifikation der Person anhand des in Fig. 3 dargestellten Identifikationsdokumentes, das die Abbildung 301 einer ersten Ansicht, beispielsweise einer Frontansicht, der Person umfasst. Das Identifikationsverfahren umfasst den Verfahrensschritt 401 des Erfassens der Abbildung 301 mittels einer optischen Erfassungseinrichtung, beispielsweise mittels einer Kamera 403. Im Verfahrensschritt 405 wird die erfasste Abbildung 301 beispielsweise digital verarbeitet, um eine Modellinformation zu erzeugen, welche eine digitale Erfassung einer zweiten Ansicht der Person ermöglicht. Hierzu kann, wie vorstehend ausgeführt, die Abbildung 301 auf deren charakteristische Merkmale hin, wie beispielsweise Augenabstand, beispielsweise anhand der Polygonzüge 407 und/oder der Vereinigungspunkte 409 untersucht werden.

Die Modellinformation 407 kann, wie vorstehend ausgeführt, mit vorgespeicherten Modellinformationen verglichen werden, um diejenige vorgespeicherte Modellinformation zu erhalten, welche der Modellinformation 407 am ehesten entspricht, d.h. welche beispielsweise die geringsten Abstände zwischen den korrespondierenden charakteristischen Merkmalen aufweist. Die ausgewählte, vorgespeicherte Modellinformation ermöglicht im Verfahrensschritt 411 die Erfassung der zweiten Ansicht der Person beispielsweise anhand eines digitalen Kopfmodells 413, das der ausgewählten, vorgespeicherten Modellinformation zugeordnet ist.

Die in den Fig. 1a und Fig. 3 dargestellten Identifikationsausweise 100 und 300 können gemäß einer Ausführungsform beispielsweise als Karten auf Polycarbonatbasis gebildet sein. Derartige Karten können beispielsweise einen Schichtaufbau aus polycarbonathaltigen Folien umfassen und darüber hinaus elektronische Schaltungen umfassen oder nicht umfassen. Für die Abbildungen 101, 301 kann ferner polycarbonathaltige Tinte verwendet werden. Diese Kombination ermöglicht in vorteilhafter Weise eine dauerhafte Verbindung der polycarbonathaltigen Folien zu einem monolithischen Block, was beispielsweise durch Laminieren, d.h. Zusammenfügen der einzigen Kunststoffschichten unter Druck und Temperatur, realisiert werden kann. Auf diese Weise wird erreicht, dass derartige Schichten nicht mehr zerstörungsfrei voneinander getrennt werden können. Gemäß einer Ausführungsform kann auch die Modellinformation 103 mittels einer polycarbonathaltigen Tinte auf die Abbildung oder generell auf das Identifikationsdokument aufgetragen und mit laminiert werden, um deren Beständigkeit zu sichern. Weitere Einzelheiten zur Herstellung eines wie vorstehend beschriebenen Polycarbonatverbundes sind in der Druckschrift WO 2009/056110 A1 zu entnehmen, deren diesbezüglicher Offenbarungsgehalt zum Offenbarungsgehalt der vorliegenden Beschreibung gehört.

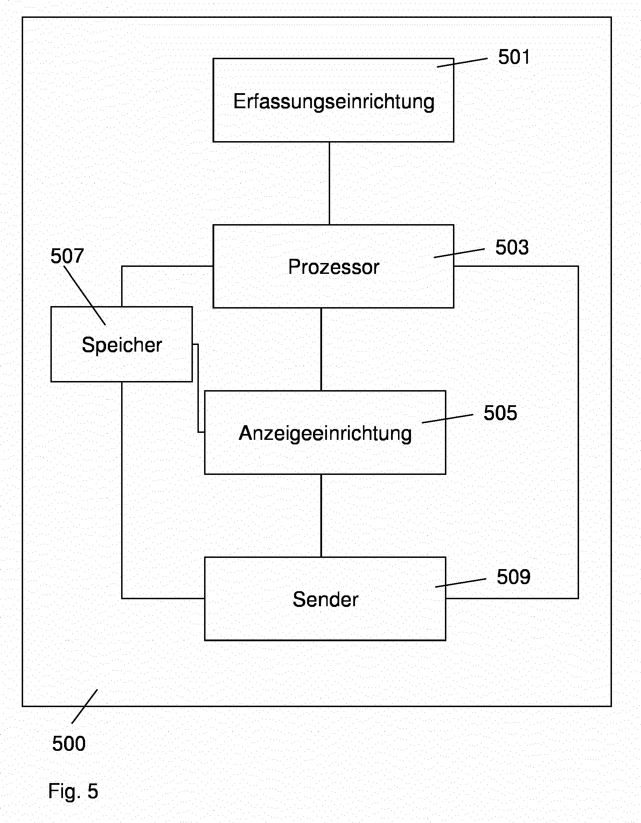

Fig. 5 zeigt ein Blockdiagramm einer Identifikationsvorrichtung 500 zur Identifikation einer Person anhand eines Identifikationsdokumentes, das eine Abbildung einer ersten Ansicht einer Person aufweist und angepasst ist, eine Modellinformation bereitzustellen, welche eine digitale Erfassung einer zweiten Ansicht der Person ermöglicht. Gemäß einer Ausführungsform kann die in Fig. 5 dargestellte Identifikationsvorrichtung 500 die Person anhand des in Fig. 1a dargestellten Identifikationsdokumentes 100, das die Modellinformation 103 aufweist, identifizieren.

Die Identifikationsvorrichtung 500 umfasst eine Erfassungseinrichtung 501 zur Erfassung der Modellinformation, sowie einen Prozessor 503, welche ausgebildet ist, eine zweite Ansicht der Person anhand der erfassten Modellinformation zu erfassen. Die Identifikationsvorrichtung 500 kann optional eine Anzeigeeinrichtung 505 umfassen, welche vorgesehen ist, die zweite Ansicht der Person anzuzeigen. Die Anzeigeeinrichtung 505 kann ausgebildet sein, ein digitales Kopfmodell mit der Seitenansicht der Person anzuzeigen. Die Identifikationsvorrichtung 500 kann ferner einen Speicher 507 aufweisen, welcher vorgesehen ist, beispielsweise eine Mehrzahl von Kopfmodellen und/oder von vorgespeicherten Modellinformationen bereitzustellen.

Der Prozessor 503 kann beispielsweise die erfasste Modellinformation mit der Mehrzahl der vorgespeicherten Modellinformationen vergleichen, um diejenige Modellinformation auszuwählen, welche der erfassten Modellinformation am ehesten entspricht. Anhand der ausgewählten, vorgespeicherten Modellinformationen kann beispielsweise ein digitales Kopfmodell ausgewählt werden, das der vorgespeicherten Modellinformation zugeordnet ist und das die zweite Ansicht der Person darstellen kann. Die Identifikationsvorrichtung 500 kann ferner einen Sender 509 aufweisen, welcher ausgebildet ist, das ausgebildete Kopfmodell beispielsweise über ein Kommunikationsnetzwerk zu einem in Fig. 5 nicht dargestellten Server zwecks biometrischen Abgleichs auszusenden.

Die Erfassungseinrichtung 501 kann beispielsweise eine optische Erfassungseinrichtung, beispielsweise eine Kamera oder ein Fotoapparat oder ein Fotodetektor, sein. Die Erfassungseinrichtung kann jedoch auch einen Magnetfelddetektor, einen Barcode-Scanner oder eine elektronische Ausleseschaltung umfassen, um die Modellinformation herauszulesen.

Die Erfassungseinrichtung 501, der Prozessor 503, die Anzeigeeinrichtung 505, der Speicher 507 sowie der Sender 509 können wie in Fig. 5 dargestellt verschaltet sein oder kommunizieren.

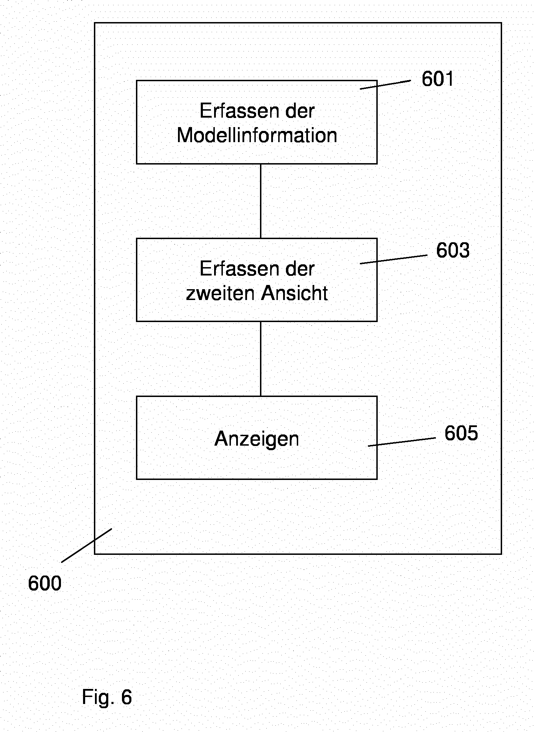

Fig. 6 zeigt ein Diagramm eines Identifikationsverfahrens 600 zur Identifikation einer Person eines Identifikationsdokumentes, das angepasst ist, eine Modellinformation bereitzustellen, wie es vorstehend beschrieben wurde. Das in Fig. 6 dargestellte Identifikationsverfahren kann beispielsweise mittels der in Fig. 5 dargestellten Identifikationsvorrichtung 500 oder mittels einer anderen programmtechnisch eingerichteten Vorrichtung ausgeführt werden.

Das Verfahren 600 umfasst das Erfassen 601 der Modellinformation sowie das Erfassen 603 einer zweiten Ansicht der Person anhand der Modellinformation. Weitere Verfahrensschritte ergeben sich unmittelbar aus der Funktionalität der in Fig. 5 dargestellten Identifikationsvorrichtung.

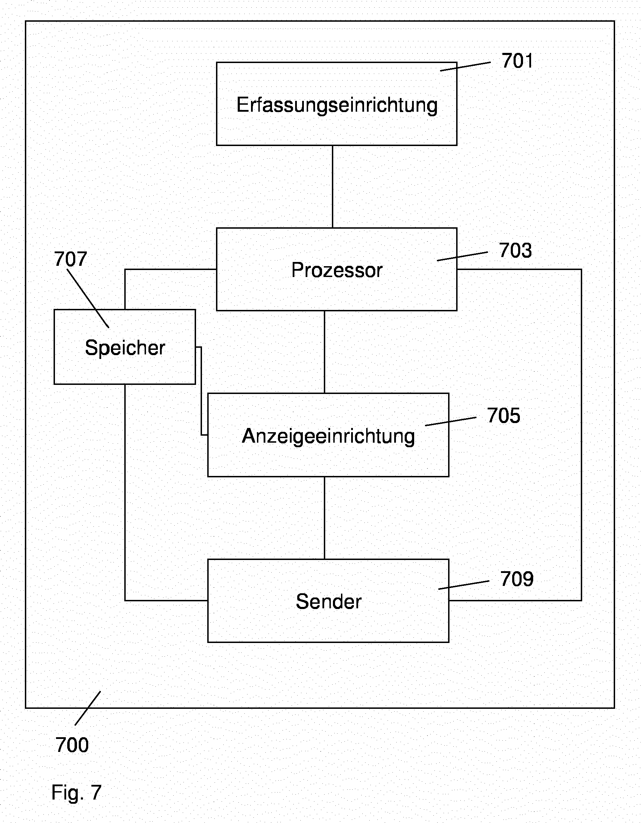

Fig. 7 zeigt ein Blockdiagramm einer Identifikationsvorrichtung 700 zur Identifikation einer Person anhand eines Identifikationsdokumentes, das lediglich eine Abbildung einer ersten Ansicht einer Person umfasst. Bei dem Identifikationsdokument kann es sich beispielsweise um das in Fig. 3 dargestellte Identifikationsdokument 300 handeln, das keinerlei Modellinformation bereitstellt. Die Identifikationsvorrichtung 700 umfasst eine Erfassungseinrichtung 701 zur Erfassung der Abbildung, sowie einen Prozessor 703, welcher ausgebildet ist, anhand der erfassten Abbildung eine Modellinformation zu erzeugen, welche eine digitale Erfassung einer zweiten Ansicht der Person ermöglicht. Die Identifikationsvorrichtung 700 umfasst ferner eine optionale Anzeigeeinrichtung 705, welche angepasst sein kann, die zweite Ansicht der Person beispielsweise unter Verwendung eines digitalen Kopfmodells anzuzeigen.

Die Identifikationsvorrichtung 700 kann optional einen Speicher 707 aufweisen, welcher eine Mehrzahl von vorgespeicherten Modellinformationen und/oder eine Mehrzahl von digitalen Kopfmodellen, welche in der Gestalt von digitalen Daten vorliegen können, speichert bzw. bereitstellt. Die Identifikationsvorrichtung 700 umfasst ferner einen optionalen Sender 709, welcher ausgebildet sein kann, die erfasste zweite Ansicht oder ein erfasstes, digitales Kopfmodell zu einem entfernten Server über ein Kommunikationsnetzwerk zum Zwecke eines biometrischen Abgleichs auszusenden.

Die Erfassungseinrichtung 701, der Prozessor 703, die Anzeigeeinrichtung 705, der Speicher 707 sowie der Sender 709 können wie in Fig. 5 dargestellt verschaltet sein oder kommunizieren.

Die Erfassungseinrichtung 701 ist beispielsweise eine optische Erfassungseinrichtung, beispielsweise eine Videokamera, ein Fotoapparat, ein Fotodetektor oder ein Fotosensor, welche angepasst ist, die Abbildung der Person zu erfassen und beispielsweise zu digitalisieren. Der Prozessor 703 ist beispielsweise ausgebildet, auf der Basis dieser Daten die Abbildung zu untersuchen, um die Modellinformation zu erzeugen. Hierzu kann der Prozessor 703 beispielsweise die Abbildung, d.h. den digitalen Datensatz, welcher die Abbildung repräsentiert, nach charakteristischen Merkmalen der Person untersuchen, beispielsweise nach einem Augenabstand, um die Modellinformation zu erzeugen. Der Prozessor 703 kann beispielsweise ausgebildet sein, die Schritte des in Fig. 4 dargestellten Verfahrens, insbesondere die Schritte 405 und 411, auszuführen.

Nach der Erfassung der Modellinformation kann der Prozessor 703 die Modellinformation wie vorstehend beschrieben mit einer Mehrzahl von vorgespeicherten Modellinformationen vergleichen, um diejenige vorgespeicherte Modellinformation auszuwählen, welche der erzeugten Modellinformation am ehesten entspricht. Hierzu kann der Prozessor 703 beispielsweise die Abstände zwischen den jeweiligen charakteristischen Merkmalen gemäß der jeweiligen Modellinformation, beispielsweise Augenabstände, vergleichen, um die vorgespeicherte Modellinformationen mit der geringsten Abstandsdifferenz auszuwählen. Anhand der ausgewählten Modellinformation kann die der ausgewählten Modellinformation zugeordnete zweite Ansicht der Person, beispielsweise mittels eines digitalen Kopfmodells, zugeordnet werden. Die zweite Ansicht bzw. das digitale Kopfmodell können jeweils mittels der Anzeigeeinrichtung 705 angezeigt werden.

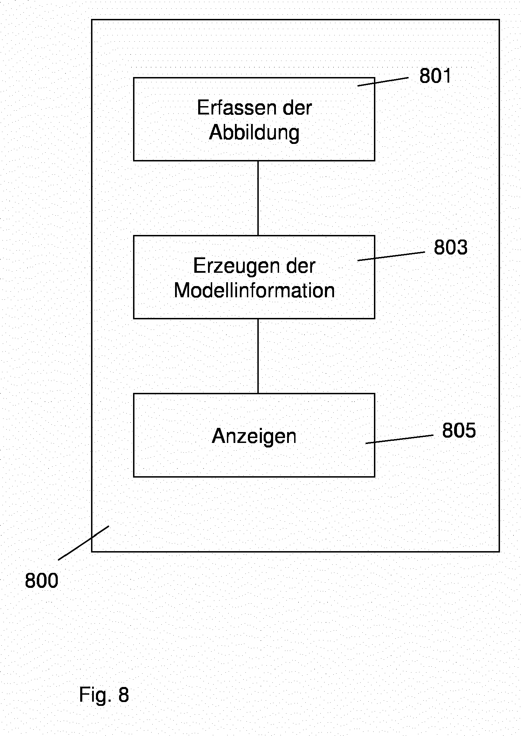

Fig. 8 zeigt ein Diagramm eines Identifikationsverfahrens 800, das beispielsweise mittels der in Fig. 7 dargestellten Identifikationsvorrichtung 700 ausgeführt werden kann. Das Identifikationsverfahren 800 umfasst das Erfassen 801 der Abbildung sowie das Erzeugen 803 einer Modellinformation, welche eine digitale Fassung einer zweiten Ansicht der Person ermöglicht, anhand der erfassten Abbildung. Weitere Verfahrensschritte ergeben sich unmittelbar aus der Funktionalität der in Fig. 7 dargestellten Identifikationsvorrichtung 700. Das in Fig. 8 dargestellte Verfahren 800 kann ferner das Anzeigen 805 der zweiten Ansicht oder eines Kopfmodells mit der zweiten Ansicht umfassen.

Das in Fig. 8 dargestellte Verfahren kann ferner die Verfahrensschritte umfassen, wie sie in Zusammenhang mit dem in Fig. 4 dargestellten Ausführungsbeispiel beschrieben wurden.

Die Erfassung oder die Erzeugung der Modellinformation zur Erzeugung der zweiten Ansicht der zu identifizierenden Person bzw. zur Erfassung eines digitalen Kopfmodells der zu identifizierenden Person gestattet eine vorteilhafte Visualisierung der Person sowie einen biometrischen Abgleich von beispielsweise drei dimensionalen Gesichtsbildern, ohne dass die dazu benötigten Daten auf einem elektronischen Datenverarbeitungssystem oder auf einem Datenträger gespeichert werden müssen. Statt dessen kann die jeweilige Modellinformation beispielsweise aus einer Aufnahme einer Abbildung der zu identifizierenden Person, beispielsweise eines Passfotos, das auf dem Dokument aufgebracht ist, gewonnen bzw. errechnet werden. Auf diese Weise kann ein besonders vorteilhafter und verbesserter manueller oder automatischer Abgleich zwischen einem Besitzer eines Identifikationsdokumentes und den darin enthaltenen Daten, wie beispielsweise der Abbildung, realisiert werden.

Die vorstehend beschriebenen Identifikationsvorrichtungen 500, 700 können beispielsweise programmtechnisch oder hardwaretechnische speziell eingerichtete Smartphones oder ein Notebooks sein. Hierzu können beispielsweise die vorstehend beschriebenen Verfahren oder deren einzelne Schritte mittels einer auf der jeweiligen Identifikationsvorrichtung 500, 700 oder an einer sonstigen programmtechnisch eingerichteten Vorrichtung wie Smartphone ablaufenden Applikationssoftware realisiert und ausgeführt werden.

### Bezugszeichen:

- 100: Identifikationsdokument
- 101: Abbildung
- 103: Modellinformationen
- 105: Polygonzug
- 107: Vereinigungspunkt

- 201: Verfahrensschritt
- 203: Kamera
- 205: Verfahrensschritt
- 207: digitales Kopfmodell

- 300: Identifikationsdokument
- 301: Abbildung

- 401: Verfahrensschritt
- 403: Kamera
- 405: Verfahrensschritt
- 407: Modellinformation
- 409: charakteristische Punkte
- 411: Verfahrensschritt
- 413: digitales Kopfmodell

- 500: Identifikationsvorrichtung
- 501: Umfassungsvorrichtung
- 503: Prozessor
- 505: Anzeigeeinrichtung
- 507: Speicher
- 509: Sender

- 600: Identifikationsverfahren
- 601: Erfassungsschritt
- 603: Erfassungsschritt
- 605: Anzeigeschritt

- 700: Identifikationsvorrichtung
- 701: Umfassungsvorrichtung
- 703: Prozessor
- 705: Anzeigeeinrichtung
- 707: Speicher
- 709: Sender

- 800: Identifikationsverfahren
- 801: Erfassungsschritt
- 803: Erzeugungsschritt
- 805: Anzeigeschritt

## Patentansprüche

1. Identifikationsdokument zur Identifikation einer Person, mit:
einer Abbildung (101) einer ersten Ansicht der Person, und
einer Modellinformation (103), welche eine digitale Erfassung einer zweiten Ansicht der Person ermöglicht, wobei die Abbildung (101) die Modellinformation (103) umfasst oder wobei die Modellinformation (103) der Abbildung (101) überlagert ist.

2. Identifikationsdokument nach Anspruch 1, wobei die Modellinformation (103) durch digitales Wasserzeichen oder einen Barcode zur digitalen Erfassung der zweiten Ansicht bereitstellbar ist.

3. Identifikationsdokument nach einem der vorstehenden Ansprüche, wobei die Modellinformation (103) zumindest ein charakteristisches Merkmal der Person in der ersten Ansicht der Person umfasst.

4. Identifikationsdokument nach einem der vorstehenden Ansprüche, wobei die Modellinformation (103) eine Auswahl eines digitalen Kopfmodels zur digitalen Erfassung der zweiten Ansicht ermöglicht.

5. Identifikationsdokument nach einem der vorstehenden Ansprüche, wobei die Modellinformation (103) optisch oder magnetisch oder elektronisch oder mittels elektromagnetischer Wellen erfassbar ist.

6. Identifikationsvorrichtung zur Identifikation einer Person anhand eines Identifikationsdokumentes, das eine Abbildung einer ersten Ansicht einer Person aufweist und angepasst ist, eine Modellinformation bereitzustellen, welche eine digitale Erfassung einer zweiten Ansicht der Person ermöglicht, wobei die Abbildung die Modellinformation umfasst oder wobei die Modellinformation der Abbildung überlagert ist, wobei die Identifikationsvorrichtung die folgenden Merkmale umfasst:
eine Erfassungseinrichtung (501) zur Erfassung der Modellinformation; und
einen Prozessor (503), welcher ausgebildet ist, anhand der Modellinformation eine zweite Ansicht der Person zu erfassen.

7. Identifikationsvorrichtung nach Anspruch 6, wobei die Erfassungseinrichtung (501) ausgebildet ist, die Modellinformation optisch oder magnetisch oder elektronisch oder mittels elektromagnetischer Wellen zu erfassen, insbesondere auszulesen.

8. Identifikationsvorrichtung nach einem der Ansprüche 6 oder 7, wobei der Prozessor (503, 703) ausgebildet ist, die Modellinformation mit einer Mehrzahl von vorgespeicherten Modellinformationen zu vergleichen, insbesondere zu korrelieren, und der Modellinformation diejenige vorgespeicherte Modellinformation zuzuordnen, welche der Modellinformation entspricht.

9. Identifikationsvorrichtung nach Anspruch 8, wobei der Prozessor (503, 703) ausgebildet ist, der Modellinformation ein digitales Kopfmodell zuzuordnen, das derjenigen vorgespeicherten Modellinformation zugeordnet ist, welche der Modellinformation entspricht, wobei das digitale Kopfmodell die zweite Ansicht der Person umfasst.

10. Identifikationsvorrichtung nach einem der Ansprüche 6 bis 9, wobei der Prozessor (503, 703) ausgebildet ist, der Modellinformation ein digitales Kopfmodell, das die zweite Ansicht der Person umfasst, zuzuordnen.

11. Identifikationsvorrichtung nach einem der Ansprüche 6 bis 10, welche einen Sender (509, 609) zum Aussenden einer Information über die zweite Ansicht der Person über ein Kommunikationsnetzwerk umfasst.

12. Identifikationsvorrichtung nach einem der Ansprüche 6 bis 11, welche ausgebildet ist, die zweite Ansicht anzuzeigen.

13. Identifikationsverfahren zur Identifikation einer Person anhand eines Identifikationsdokumentes, das eine Abbildung einer ersten Ansicht einer Person aufweist und angepasst ist, eine Modellinformation bereitzustellen, welche eine digitale Erfassung einer zweiten Ansicht der Person ermöglicht, wobei die Abbildung die Modellinformation umfasst oder wobei die Modellinformation der Abbildung überlagert ist, wobei das Identifikationsverfahren die folgenden Schritte umfasst:
Erfassen der Modellinformation (601); und
Erfassen (603) einer zweiten Ansicht der Person anhand der Modellinformation.

14. Identifikationsverfahren nach Anspruch 13, bei dem die zweite Ansicht angezeigt wird.

## Claims

1. Identification document for identifying a person, comprising:
an image (101) of a first view of the person, and
a model information (103) which enables a digital detection of a second view of the person, wherein the image (101) comprises the model information (103) or wherein the model information (103) is superimposed on the image (101).

2. Identification document according to claim 1, wherein the model information (103) can be provided by digital watermark or a barcode for digitally detecting the second view.

3. Identification document according to any one of the preceding claims, wherein the model information (103) comprises at least a characteristic feature of the person in the first view of the person.

4. Identification document according to any one of the preceding claims, wherein the model information (103) enables a selection of a digital head model for digitally detecting the second view.

5. Identification document according to any one of the preceding claims, wherein the model information (103) is optically or magnetically or electrically or by means of electromagnetic waves detectable.

6. Identification device for identifying a person on the basis of an identification document, the identification document comprising an image of a first view of a person and being adapted to provide a model information which enables a digital detection of a second view of the person, wherein the image comprises the model information or wherein the model information is superimposed on the image, wherein the identification device comprises the following features:
a detection device (501) for detecting the model information; and
a processor (503) configured to detect a second view of the person on the basis of the model information.

7. Identification device according to claim 6, wherein the detection device (501) is configured to detect, in particular to read out, the model information optically or magnetically or electrically or by means of electromagnetic waves.

8. Identification device according to any one of claims 6 or 7, wherein the processor (503, 703) is configured to compare, in particular to correlate, the model information with a plurality of pre-stored model information, and to assign that pre-stored model information corresponding to the model information to the model information.

9. Identification device according to claim 8, wherein the processor (503, 703) is configured to assign a digital head model, which is assigned to that pre-stored model information corresponding to the model information, to the model information, wherein the digital head model comprises the second view of the person.

10. Identification device according to any one of claims 6 to 9, wherein the processor (503, 703) is configured to assign a digital head model comprising the second view of the person to the model information.

11. Identification device according to any one of claims 6 to 10, which comprises a transmitter (509, 609) for transmitting an information about the second view of the person over a communication network.

12. Identification device according to any one of claims 6 to 11, which is configured to display the second view.

13. Identification method for identifying a person on the basis of an identification document, the identification document comprising an image of a first view of a person and being adapted to provide a model information which enables a digital detection of a second view of the person, wherein the image comprises the model information or wherein the model information is superimposed on the image, wherein the identification method comprises the following steps:
detecting the model information (601); and
detecting (603) a second view of the person on the basis of the model information.

14. Identification method according to claim 13, wherein the second view is displayed.

## Revendications

1. Document d'identification pour identifier une personne, comportant:
une image (101) d'une première vue de la personne, et
une information de modèle (103) qui permet une détection digitale d'une deuxième vue de la personne, l'image (101) comportant l'information de modèle (103) ou l'information de modèle (103) étant superposée à l'image (101).

2. Document d'identification selon la revendication 1, dans lequel l'information de modèle (103) peut être fournie au moyen d'un filigrane digital ou d'un code à barres pour détecter la deuxième vue d'une manière digitale.

3. Document d'identification selon l'une des revendications précédentes, dans lequel l'information de modèle (103) comporte au moins un trait caractéristique de la personne dans la première vue de la personne.

4. Document d'identification selon l'une des revendications précédentes, dans lequel l'information de modèle (103) permet un choix d'un modèle de tête digital pour détecter la deuxième vue d'une manière digitale.

5. Document d'identification selon l'une des revendications précédentes, dans lequel l'information de modèle (103) est détectable optiquement ou magnétiquement ou au moyen d'ondes électromagnétiques.

6. Dispositif d'identification pour identifier une personne au moyen d'un document d'identification, qui comporte une image d'une première vue d'une personne et qui est adapté à fournir une information de modèle qui permet une détection digitale d'une deuxième vue de la personne, l'image comportant l'information de modèle ou l'information de modèle étant superposée à l'image, le dispositif d'identification comportant les caractéristiques suivantes:
un moyen de détection (501) pour détecter l'information de modèle; et
un processeur (503) qui est configuré pour détecter une deuxième vue de la personne au moyen de l'information de modèle.

7. Dispositif d'identification selon la revendication 6, dans lequel le moyen de détection (501) est conçu pour détecter, en particulier pour lire, l'information de modèle optiquement ou magnétiquement ou au moyen d'ondes électromagnétiques.

8. Dispositif d'identification selon la revendication 6 ou 7, dans lequel le processeur (503, 703) est configuré pour comparer, en particulier pour corréler, l'information de modèle avec une pluralité d'informations de modèle préenregistrées, et d'associer l'information de modèle préenregistrée correspondant à l'information de modèle à l'information de modèle.

9. Dispositif d'identification selon la revendication 8, dans lequel le processeur (503, 703) est configuré pour associer un modèle de tête digital à l'information de modèle, le modèle de tête digital étant associé à l'information de modèle préenregistrée qui correspond à l'information de modèle, dans lequel le modèle de tête digital comporte la deuxième vue de la personne.

10. Dispositif d'identification selon l'une des revendications 6 à 9, dans lequel le processeur (503, 703) est configuré pour associer un modèle de tête digital à l'information de modèle, le modèle de tête digital comportant la deuxième vue de la personne.

11. Dispositif d'identification selon l'une des revendications 6 à 10 qui comporte un émetteur (509, 609) pour envoyer une information sur la deuxième vue de la personne par l'intermédiaire d'un réseau de communication.

12. Dispositif d'identification selon l'une des revendications 6 à 10 qui est conçu pour afficher la deuxième vue.

13. Procédé d'identification pour identifier une personne au moyen d'un document d'identification, qui comporte une image d'une première vue d'une personne et qui est adapté à fournir une information de modèle qui permet une détection digitale d'une deuxième vue de la personne, l'image comportant l'information de modèle ou l'information de modèle étant superposée à l'image, le procédé d'identification comportant les étapes suivantes:
détecter l'information de modèle (601); et
détecter (603) une deuxième vue de la personne au moyen de l'information de modèle.

14. Procédé d'identification selon la revendication 13, dans lequel la deuxième vue est affichée.
